## Europäisches Patentamt
## European Patent Office
## Office européen des brevets

(19)

(11) Veröffentlichungsnummer: **0 134 480**
**B1**

(12)

# EUROPÄISCHE PATENTSCHRIFT

(45) Veröffentlichungstag der Patentschrift:
04.11.87

(51) Int. Cl.⁴: **C 03 B  8/04,** C 03 C  17/02 //
C03B37/018, C03B37/025

(21) Anmeldenummer: **84107887.6**

(22) Anmeldetag: **05.07.84**

(54) **Verfahren zur Herstellung von Glas durch Abscheidung aus der Gasphase.**

(30) Priorität: **07.07.83 DE 3324539**

(43) Veröffentlichungstag der Anmeldung:
**20.03.85 Patentblatt 85/12**

(45) Bekanntmachung des Hinweises auf die Patenterteilung:
**04.11.87 Patentblatt 87/45**

(84) Benannte Vertragsstaaten:
**DE FR GB**

(56) Entgegenhaltungen:
**CH-A-615 760**
**DE-A-2 907 731**
**DE-A-3 025 772**

(73) Patentinhaber: **Siemens Aktiengesellschaft Berlin und München, Wittelsbacherplatz 2, D-8000 München 2 (DE)**

(72) Erfinder: **Schneider, Hartmut, Dr.,, Blütenstrasse 12, D-8000 München 40 (DE)**

## Beschreibung

Die vorliegende Erfindung betrifft ein Verfahren zur Herstellung von Glas durch Abscheidung aus der Gasphase nach dem Oberbegriff des Patentanspruchs 1.

Für die Herstellung von optischen Glasfasern werden Vorformen benötigt, die aus chemisch reinem Quarzglas oder ähnlichen Gläsern bestehen. Zur Einstellung der Brechzahl werden die Gläser noch mit verschiedenen Dotierstoffen modifiziert, in der Regel mit $GeO_2$, $P_2O_5$ oder Fluorid. Da das Brechzahlprofil der Faser, die aus der Vorform gezogen wird, dem der Vorform geometrisch ähnlich ist, muß diese bereits das Sollprofil enthalten.

Aus der Klasse der bekannten Verfahren (vergl. beispielsweise Appl. Optics 18 (1979), S.3684-3693) ist das MCVD-Verfahren hervorzuheben (vergl. Proc. IEEE 62 (1974), S. 1278-1279). Durch die schichtweise Abscheidung von Reinstglas aus der Gasphase auf die Innenseite eines zylindrischen Quarzglasrohres lassen sich bei diesem Verfahren an die Erfordernisse der Nachrichtentechnik angepaßte radiale Brechzahlprofile erzielen. Dazu beispielsweise werden $SiCl_4$ mit $O_2$ sowie $GeCl_4$, $POCl_3$ oder $SF_6$ als Dotierstoff durch das Rohr geleitet und dort in einer Heizzone zu amorphen Oxiden umgesetzt, die sich stromabwärts auf der Wand absetzen und dort zum Glas aufgeschmolzen werden. Typischerweise werden dabei Glasschichten von 10 bis 25 μm aufgebracht. Aus Gründen der Wirtschaftlichkeit wäre es jedoch wünschenswert, dickere Schichten pro Zeitintervall abzuscheiden. Dem steht jedoch entgegen, daß sich beim Sintern oder Aufschmelzen dicker Pulverschichten häufig geschlossene Poren ausbilden, die später, insbesondere beim Kollabieren des Rohres zum Stab, zur Ausbildung von Blasen und damit zur Zerstörung des Profils, wenn nicht gar der Vorform führen. Des weiteren kommt hinzu, daß bei größeren Gasdurchsätzen die Durchheizung der Mischung nicht mehr vollständig gelingt. Von gravierendem Nachteil ist außerdem, daß dicke Schichten wegen des ihnen eigenen ungünstigen, nach innen abfallenden Brechzahlprofils, zu einem in gewisser Weise sägezahnförmigen Gesamtprofil führen, das unerwünscht ist.

Bisher wurde versucht, das Problem der Blasenbildung und Aufheizung durch Modifikation (Verbreiterung) der Heizzone zu lösen (vergl. J. Non-Cryst. Sol. 38, 1980, S. 831-836) Es läßt sich auch zur Erleichterung des Aufschmelzens die Viskosität durch Kodotierung mit $P_2O_5$ als Flußmittel erniedrigen, was jedoch die Lichttransmission des Glases verschlechtert. Möglich ist auch das Beimischen von Helium, das wegen seiner hohen Diffusionsfähigkeit die Pulverkonsolidierung begünstigt. Höhere Glasschmelzraten als 0,5 g/min lassen sich jedoch nur unter Inkaufnahme von Nachteilen realisieren.

Aus der DE-A1-30 25 772 ist ein Verfahren der eingangs genannten Art bekannt geworden, das dazu dient, den Glasrohrquerschnitt während der Abscheidung auf einem vorbestimmbaren sowie einstellbaren Wert zu halten. Beispielsweise wird der Innendurchmesser des Glasrohres während der Abscheidung auf dem Durchmesser des unbeschichteten Glasrohres gehalten. Auch sind herstellungsbedingte Schwankungen des Innendurchmessers mit diesem Verfahren ausgleichbar. Insbesondere dient dieses Verfahren dazu, die durch die Abscheidung bedingte Verringerung des Innendurchmessers des Glasrohres und damit eine stetige Verminderung der Abscheiderate zu verhindern.

Aus der CH-A5-615 760 ist ein Verfahren bekannt geworden, bei dem kontinuierlich ein Glasrohr gezogen wird und während des Ziehvorgangs eine Innenbeschichtung des Rohres durch Abscheidung aus der Gasphase und eine anschließende Kollabierung des innenbeschichteten Rohres zum Stab kontinuierlich vorgenommen werden.

Aufgabe der vorliegenden Erfindung ist es, ein Verfahren der eingangs genannten Art anzugeben, bei dem dickere Pulverschichten pro Zeitintervall abgeschieden und gefahrloser aufgeschmolzen werden können.

Diese Aufgabe wird durch die im kennzeichnenden Teil des Patentanspruchs 1 angegebenen Merkmale gelöst.

Von Vorteil ist es dabei, gemäß Anspruch 2 mit einem Überdruck im Inneren des Rohres zu arbeiten, der das erweichte Rohr erweitert.

Der Innendruck wird bevorzugterweise gemäß Anspruch 3 erzeugt.

Bei einem Verfahren nach Anspruch 2 oder 3 ist es auch vorteilhaft, so vorzugehen, wie es im Anspruch 4 angegeben ist. Dies bedeutet, daß das Rohr wiederholt expandiert und geschrumpft wird.

Die Erfindung wird in der folgenden Beschreibung anhand der Figuren näher erläutert. Von den Figuren zeigen:

Figur 1 einen Längsschnitt durch ein trichterförmiges Glasrohrstück, in dem eine Glasschicht abgeschieden wird und

Figur 2 eine Anordnung zur Durchführung des Verfahrens zur Glasabscheidung im trichterförmigen Rohr.

Die Figuren sind schematisch und nicht maßstabsgetreu.

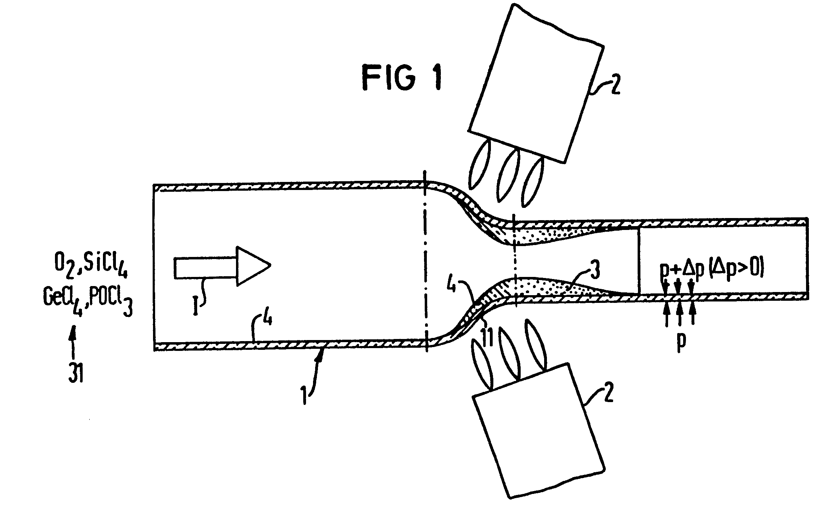

In der Figur 1 ist das trichterförmige Glasrohr mit 1 bezeichnet, das durch einen Brenner 2 in einer Heizzone bis zur Erweichungstemperatur des Glases erhitzt wird, in der oder auch in dessen Nähe sich der konische Abschnitt 11 des Rohres befindet. Die zur Abscheidung erforderliche Reaktionsgesmischung, beispielsweise bestehend aus $SiCl_4$, $O_2$, $GeCl_4$, $POCl_3$, stromt in Richtung des Pfeiles I durch den größeren Querschnitt des trichterförmigen Rohres 1, das beispielsweise aus Querzglas besteht, ein. Die eingeleitete Reaktionsgasmischung reagiert im wesentlichen im konischen Abschnitt 11 zum Pulver, das sich stromabwärts des konischen Abschnitts 11 auf der beispielsweise unbeschichteten Innenwend des Rohres 1 als Pulverschicht 3 niederschlägt. Im Rohr 1 wird ein positiver Differenzdruck Δp in Bezug auf einen auf die Außenwend des Rohres 1 wirkenden äußeren Druck p aufrechterhalten, der bewirkt, daß beim Vorrücken des Brenners 2 längs des Rohres 1 in Richtung des Pfeiles I und beim laufenden Klerschmelzen der stromabwärts niedergeschlagenen Pulverschicht 3 zur Glasschicht 4 in der Heizzone des Rohr 1 im erweichten niederviskosen Bereich erweitert wird und der konische Abschnitt 11 so der Heizzone folgt. Nach Auflegen einer Schicht wird das Rohr unter erneuter Beheizung wieder geschrumpft.

Das soeben beschrieben Verfahren wird für jede aufzutragende Schicht wiederholt.

Nach Abscheidung der vorgesehen Anzahl von Schichten wird das Rohr wie üblich zum Stab kollabiert.

Das beschriebene Verfahren weist folgende Vorteile auf: Im konischen und auch vergleichsweise dünnwandigen Rohrabschnitt 11 wird die einströmende Gasmischung effektiver aufgeheizt, was höhere Massendurchsätze ermöglicht. Die Drift der SiO$_2$-Partikel zur Wand wird durch Einschnürung der Gasströmung begünstigt. Das Sintern der auf oder in der Nähe des konischen Abschnitts expandierenden Pulverschicht wird beschleunigt, weil die Streckung den Porenkollaps fördert. Nicht zuletzt wird durch das wiederholte Expandieren und Schrumpfen des Rohres des Glas homogenisiert. Die Stoffdiffusion wird durch die Scherströmung zwischen den Schichten begünstigt.

Dies führt zur Glättung des Profils und zur Verringerung der Lichtstreuung des Materials.

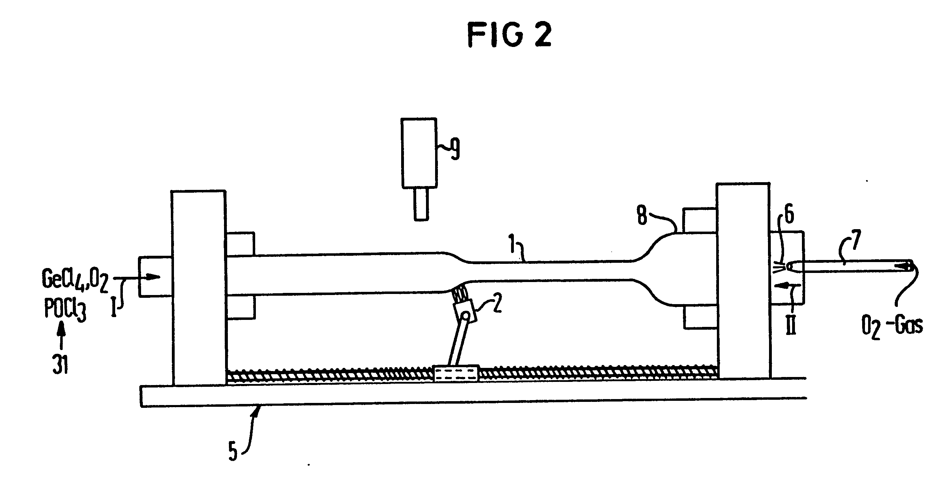

Zur Durchführung des Verfahrens wird gemäß Figur 2 ein Quarzglasrohr 1 in eine Glasdrehbank 3 eingespannt und mit einem Knallgasbrenner 2 beheizt. Der Überdruck im Rohr wird durch einen Gasgegenstrom 6 aus beispielsweise O$_2$ in Richtung des Pfeiles II mit Hilfe eines Blasrohres 7 hervorgerufen, das in einem Gasauslaufrohr 8 einen Stau erzeugt (siehe dazu DE-OS 29 07 731 = VPA 79 P 7025). Der Rohrdurchmesser in der Heizzone wird mit einem optischen Durchmessermeßgerät 9 nech dem Prinzip der Schattenmessung erfaßt und durch Ändern des Gegenstromes 6 geregelt. Je nach Maßgabe des gewünschten Expansionsverhältnisses, das typischerweise zwischen 5 % und 40 % liegt, sind Tempereturen zwischen 1750° C und 1950° C bei Differenzdrucken von 100 bis 5 mbar erforderlich.

## Patentansprüche

1. Verfahren zur Herstellung von Glas durch Abscheidung aus der Gasphase auf der Innenwand eines Glasrohres (1), wobei während der Abscheidung eine Heizzone das Glasrohr (1) in dessen Längsrichtung durchwandert und gleichzeitig das Glasrohr (1) von einer Reaktionsgasmischung (31) durchströmt wird, die in der Heizzone zu Glaspulver reagiert, das sich stromabwärts der Heizzone als Pulverschicht (3) auf der Innenwand des Rohres (1) abscheidet, die von der nachwandernden Heizzone zum Glasfilm klargeschmolzen wird und wobei während der Abscheidung eine mit der Heizzone mitwandernde Erweiterung des inneren Rohrdiameters vorgenommen wird, dadurch gekennzeichnet, daß die Erweiterung des inneren Rohrdiameters so vorgenommen wird daß ein den Strömungsquerschnitt der durch das Rohr (1) strömenden Reaktionsgasmischung (31) in Strömungsrichtung konisch verengender und mit der Heizzone mitwandernder Rohrabschnitt (11) erzeugt wird, stromabwärts dessen die Pulverschicht (3) abgeschieden wird.

2. Verfahren nach Anspruch 1, dadurch gekennzeichnet, daß die Erweiterung des inneren Rohrdiameters durch Aufrechterhaltung eines Überdruckes (Δp) im Inneren des Rohres (1) in Bezug auf einen auf die Außenwand des Rohres (1) wirkenden äußeren Druck (p) erzeugt wird, der so groß gewählt ist, daß sich das in der Heizzone erweichte Rohr (1) erweitert.

3. Verfahren nach Anspruch 2, dadurch gekennzeichnet, daß der Überdruck (Δp) im Inneren des Rohres (1) durch den Strom der in das Rohr (1) eingeleiteten Reaktionsgasmischung (31) und durch einen ebenfalls in das Rohr (1) eingeleiteten Gasgegenstrom (6) erzeugt wird.

4. Verfahren nach einem der vorhergehenden Ansprüche, insbesondere nach Anspruch 2 oder 3, dadurch gekennzeichnet, daß das Glasrohr (1) nach Abscheidung einer Glasschicht (4) geschrumpft wird und daß zur Abscheidung einer nächsten Glasschicht im geschrumpften Rohr wieder ein mit der Heizzone mitwandernder konischer Abschnitt durch Erweiterung des geschrumpften Rohres erzeugt wird.

## Claims

1. A method of making glass by deposition from the gas phase onto the inner wall of a glass tube (1), in which during the deposition a heating zone travels through the glass tube (1) in the longitudinal direction and at the same time a flow of a reaction gas mixture (31) is passed through the glass tube (1), this mixture reacting in the heating zone to form glass powder, which is deposited downstream of the heating zone as a powder layer (3) on the inner wall of the tube (1), this layer being fused by the travelling heating zone into a clear glass film, and in which an expansion of the inner diameter of the tube which travels with the heating zone, is carried out during the deposition, characterised in that the expansion of the inner diameter of the tube is effected in such a way that a tube section (11) is produced which conically narrows the cross-section of the flow of reaction gas mixture (31) flowing through the tube (1) in the direction of flow and which travels with the heating zone, the powder layer (3) being deposited downstream of this.

2. A method as claimed in Claim 1, characterised in that the expansion of the inner diameter of the tube is produced by maintaining an excess pressure ($\Delta$p) in the interior of the tube (1) in relation to an external pressure (p) acting on the outer wall of the tube (1), this excess pressure being selected to be great enough to cause the tube (1), which is softened in the heating zone, to expand.

3. A method as claimed in Claim 2, characterised in that the excess pressure ($\Delta$p) in the interior of the tube (1) is created by the flow of reaction gas mixture (31) being fed into the tube (1) and by a counter-flow of gas (6) also being fed into the tube (1).

4. A method as claimed in one of the previous Claims, characterised in that after deposition of a glass layer (4), the glass tube (1) is made to contract; and that for depositing another layer of glass, a conical section which travels with the heating zone is again produced in the contracted tube by expansion thereof.

**Revendications**

1. Procédé de fabrication de verre par dépôt en phase gazeuse sur la paroi intérieure d'un tube de verre (1) qui consiste, pendant le dépôt, à faire se déplacer une zone de chauffage dans le tube de verre (1) suivant sa direction longitudinale et en même temps à faire passer dans le tube de verre (1) un mélange de gaz de réaction devenant par réaction dans la zone de chauffage de la poudre de verre (3) qui se dépose sur la paroi intérieure du tube (1) et en aval de la zone chaude, sous la forme d'une couche de poudre (3), laquelle est fondue en une pellicule de verre par le passage ultérieur de la zone de chauffage, et à effectuer pendant le dépôt un élargissement du diamètre intgrieur du tube accompagnant la zone de chauffage, caractérisé en ce qu'il consiste à effectuer l'élargissement du diamètre intérieur du tube de manière à produire un tronçon de tube (1) qui rétrécit coniquement, dans la direction du courant, la section droite d'écoulement du mélange de gaz de réaction (31) s'écoulant dans le tube (1), qui accompagne la zone de chauffage et en aval duquel la couche de poudre (3) est déposée.

2. Procédé suivant la revendication 1, caractérisé en ce qu'il consiste à produire l'élargissement du diamètre intérieur du tube en maintenant, par rapport à une pression (p) extérieure agissant sur la paroi extérieure du tube (1), une surpression ($\Delta$p) à l'intérieur du tube si grande que le tube (1) amolli dans la zone de chauffage s'élargit.

3. Procédé suivant la revendication 2, caractérisé en ce qu'il consiste à produire la surpression ($\Delta$p) à l'intérieur du tube (1) par le courant du mélange de gaz de réaction (31) introduit dans le tube (1) et par un contre-courant gazeux (6) introduit également dans le tube (1).

4. Procédé suivant l'une des revendications précédentes, notamment la revendication 2 ou 3, caractérisé en ce qu'il consiste à rétreindre le tube de verre (1) après le dépôt d'une couche de terre (4) et, pour déposer une couche de verre suivante dans le tube rétreint, à produire à nouveau un tronçon conique accompagnant la zone de chauffage, en élargissant le tube rétreint.

## FIG 1

$O_2, SiCl_4$
$GeCl_4, POCl_3$

$I$

$p + \Delta p \, (\Delta p > 0)$

$p$

## FIG 2

7

O$_2$-Gas

6

II

8

1

2

5

I

GeCl$_4$,O$_2$
POCl$_3$
31